# EUROPÄISCHE PATENTANMELDUNG

(11) **EP 3 450 213 A1**
(43) Veröffentlichungstag der Anmeldung: **06.03.2019**
(21) Anmeldenummer: 18173502.8
(22) Anmeldetag: 22.05.2018
(51) Int. Cl.: B60C 11/12, B60C 11/03, B60C 11/13

(54) **FAHRZEUGLUFTREIFEN**

(30) Priorität: 30.08.2017 DE 102017215188
(71) Anmelder: Continental Reifen Deutschland GmbH, 30165 Hannover (DE)
(72) Erfinder: Behr, Ulrich, 30167 Hannover (DE)
(74) Vertreter: Finger, Karsten

(57) **Zusammenfassung**

Fahrzeugluftreifen mit einem Laufstreifen mit Profilpositiven, beispielsweise Profilblöcke (4, 7) oder Profilbänder (1), welche jeweils mit einer Anzahl von in Draufsicht gerade, parallel zueinander sowie in Umfangsrichtung oder von der Umfangsrichtung unter einem um bis zu 30° abweichenden Winkel verlaufenden Einschnitten (2', 2") versehen sind, welche eine Breite von 0,4 mm bis 1,4 mm aufweisen.

Die Einschnitte (2', 2") sind in Gruppen (2) angeordnet und sind die einzigen Einschnitte (2', 2") im jeweiligen Profilpositiv, wobei zu jeder Gruppe (2) zumindest drei innerhalb der Profilpositive endende Einschnitte (2', 2") gehören, welche eine Tiefe von mindestens 2,5 mm und höchstens 90% der Profiltiefe und eine Länge (1', 1") von 4,0 mm bis 40,0 mm aufweisen, wobei die innerhalb einer Gruppe (2) benachbarten Einschnitte (2', 2"), bezogen auf ihre Mittelebenen, voneinander Normalabstände (ai) von 3,0 mm bis 12,0 mm aufweisen.

## Beschreibung

Die Erfindung betrifft einen Fahrzeugluftreifen mit einem Laufstreifen mit Profilpositiven, wie beispielsweise Profilblöcke oder Profilbänder, welche jeweils mit einer Anzahl von in Draufsicht gerade, parallel zueinander sowie in Umfangsrichtung oder von der Umfangsrichtung unter einem um bis zu 30° abweichenden Winkel verlaufenden Einschnitten versehen sind, welche eine Breite von 0,4 mm bis 1,4 mm aufweisen.

Ein Fahrzeugluftreifen der eingangs genannten Art, welcher ein Winterreifen ist, ist aus der WO 2017/092915 A1 bekannt. In den Profilpositiven des Laufstreifens sind zur Umfangsrichtung unter einem Winkel von ±5° bis ±15° verlaufende, seichte Einschnitte mit einer Tiefe von 0,2 mm bis 0,5 mm ausgebildet. Ferner ist in den Profilpositiven eine Anzahl von parallel zueinander verlaufenden Einschnitten ausgebildet, welche in Draufsicht zur Umfangsrichtung unter einem Winkel von ≥50° verlaufen und die in Umfangsrichtung verlaufenden Einschnitte kreuzen. Durch diese Vielzahl an Einschnitten sollen die Griffeigenschaften auf Eis bei neuem Reifen verbessert werden.

Es ist ferner bekannt, in Profilpositiven von Laufstreifen Einschnitte auszubilden, um die Steifigkeit der Profilpositive und die Fahreigenschaften auf nasser Fahrbahn zu beeinflussen. Solche Einschnitte können auch in für Sommerreifen oder Ganzjahresreifen vorgesehenen Laufstreifen ausgebildet sein und verlaufen in Draufsicht üblicherweise in Querrichtung des Laufstreifens.

Der Erfindung liegt die Aufgabe zugrunde, bei einem Reifen der eingangs genannten Art, der als Sommer-oder Ganzjahresreifen eingesetzt werden soll, die Fahr-und Handlingeigenschaften, insbesondere auf nasser Fahrbahn, unter Bedachtnahme auf ein möglichst geringes Abrollgeräusch zu optimieren.

Die gestellte Aufgabe wird erfindungsgemäß dadurch gelöst, dass die Einschnitte in Gruppen angeordnet und die einzigen Einschnitte im jeweiligen Profilpositiv sind, wobei zu jeder Gruppe zumindest drei innerhalb des Profilpositivs endende Einschnitte gehören, welche eine Tiefe von mindestens 2,5 mm und höchstens 90% der Profiltiefe sowie eine Länge von 4,0 mm bis 40,0 mm aufweisen, wobei die die innerhalb einer Gruppe benachbarten Einschnitte bezogen auf ihre Mittelebenen voneinander Normalabstände von 3,0 mm bis 12,0 mm aufweisen.

Durch das erfindungsgemäße Anordnen von in Umfangsrichtung verlaufenden Einschnitten in Gruppen wird beim Fahren auf nasser Fahrbahn Wasser besonders gut von den Einschnitten aufgenommen, sodass die Griff- und Handlingeigenschaften auf nasser Fahrbahn gegenüber bekannten Reifen deutlich verbessert sind. Da die Einschnitte eine Tiefe von mindestens 2,5 mm aufweisen, verringern sie gleichzeitig die Steifigkeit der Profilpositive, sodass diese beim Abrollen des Reifens am Untergrund besonders gleichmäßig abplatten, wodurch auch der Rollwiderstand des Reifens verringert wird und der Laufstreifen sehr gleichmäßig abreibt. Da die Einschnitte bevorzugt in oder im Wesentlichen in Umfangsrichtung verlaufen, leisten sie zudem keinen nennenswerten Beitrag zum Abrollgeräusch des Reifens.

Bevorzugter Weise betragen die Normalabstände, welche die innerhalb einer Gruppe benachbarten Einschnitte, bezogen auf ihre Mittelebenen, voneinander aufweisen, 4,0 mm bis 7,0 mm. Gegenseitige Abstände der Einschnitte in ist diesem Bereich sind für einen gleichförmigen Abrieb der Profilpositive besonders vorteilhaft.

Gemäß einer bevorzugten Ausführungsvariante der Erfindung sind Gruppen von Einschnitten vorgesehen, deren Einschnitte in Draufsicht bezüglich einer von der Erstreckungsrichtung der Einschnitte und der radialen Richtung aufgespannten, durch die Mitte der Gruppe verlaufenden Mittelebene symmetrisch angeordnet sind. Dadurch wird die Steifigkeit der mit solchen Gruppen von Einschnitten versehenen Profilpositive gleichmäßig verringert. Ein beim Abrollen des Reifens auf nassem Untergrund mit der Außenfläche der Profilpositive in Kontakt kommender Wasserfilm wird durch solche Gruppen von Einschnitten in besonders vorteilhafter Weise unterbrochen.

Die erwähnten Effekte sind besonders ausgeprägt, wenn Gruppen von Einschnitten vorgesehen sind, die bis zu fünf Einschnitte umfassen.

Gemäß einer weiteren bevorzugten Ausführungsvariante sind Gruppen von Einschnitten vorgesehen, in welchen der/die mittlere(n) Einschnitt(e) die beiden äußeren Einschnitte in Draufsicht beidseitig überragt bzw. überragen, wobei der bezogen auf die Enden der Einschnitte ermittelte Überstand 1,0 mm bis 10,0 mm, insbesondere höchstens 5,0 mm, beträgt. Da die randseitigen Bereiche von Profilpositiven gegenüber den mittleren Bereichen der Profilpositive eine etwas geringere Steifigkeit aufweisen, wird durch diese Maßnahme die Steifigkeit der Profilpositive über ihrer axiale Breite vergleichmäßigt. Im Bereich der Ränder der Profilpositive kann zudem beim Fahren auf nasser Fahrbahn Wasser leichter in die Rillen, welche die Profilpositive seitlich begrenzen, abfließen. Somit sind auch die Fahr- und Handlingeigenschaften auf nasser Fahrbahn weiter verbessert.

Bei Einschnittgruppen, die mehr als einen mittleren Einschnitt aufweisen, ist es von Vorteil, wenn der Überstand der mittleren Einschnitte bis zu den beiden äußeren Einschnitten stufenweise abnimmt.

Gemäß einer weiteren bevorzugten Ausführungsvariante beträgt die Länge der Einschnitte 8,0 mm bis 35,0 mm, vorzugsweise 15,0 mm bis 25,0 mm. Einschnitte mit einer solchen Länge liefern sehr ausgewogene Eigenschaften im Hinblick auf die Wasseraufnahme und der Herabsetzung der Steifigkeit der Profilpositive.

Bevorzugter Weise beträgt die Breite der Einschnitte höchstens 1,2 mm. Dies ermöglicht eine besonders variable Anordnung der Einschnitte in Gruppen in unterschiedlich gestalteten Profilpositiven, sodass die erzielbaren Effekte vorteilhafterweise besonders deutlich sind.

Gemäß einer weiteren bevorzugten Ausführungsvariante sind Gruppen von Einschnitten vorgesehen, bei welchen die Breite der bzw. des mittleren Einschnitte(s) um mindestens 0,1 mm größer ist als die Breite der beiden äußeren Einschnitte. Dies trägt zusätzlich zur Vergleichmäßigung der Steifigkeit und Verbesserung der Fahr- und Handlingeigenschaften bei. Die zugrundeliegende Wirkungsweise ist ähnlich zu der bereits beschriebenen Wirkungsweise von Gruppen mit äußeren Einschnitten einer geringeren Länge.

Für eine möglichst optimale Beeinflussung der Steifigkeit der Profilpositive ist es von Vorteil, wenn die äußeren Einschnitte zu der am nächsten befindlichen Kante des Profilpositives einen Mindestabstand von 2,0 mm aufweisen. Darüber hinaus lassen sich solche randseitigen Einschnitte bei der Vulkanisation des Reifens problemlos in die Profilpositive einformen.

Es ist ferner von Vorteil, wenn Gruppen von Einschnitten vorgesehen sind, bei welchen die äußeren Einschnitte an ihrer tiefsten Stelle um mindestens 0,5 mm, insbesondere um mindestens 1,0 mm, seichter sind als der bzw. die mittleren Einschnitt(e) an ihrer tiefsten Stelle. Auch durch diese Maßnahme lässt sich auf die Steifigkeit der Profilpositive und die Wasseraufhahmeeigenschaften der Einschnitte Einfluss nehmen.

Gemäß einer weiteren bevorzugten Ausführungsvariante sind Gruppen von Einschnitten vorgesehen, bei welchen zumindest ein Einschnitt, insbesondere sämtliche Einschnitte, im Längsschnitt betrachtet, einen flach-U-förmigen Einschnittgrund mit einem in konstanter Tiefe verlaufenden zentralen Grundabschnitt aufweisen.

Gemäß einer ebenfalls bevorzugten Ausführungsvariante sind Gruppen von Einschnitten vorgesehen, bei welchen zumindest ein Einschnitt, insbesondere sämtliche Einschnitte, im Längsschnitt betrachtet, wannenförmig ist bzw. sind, sodass der/die Einschnitt(e) in seiner/ihrer Mitte am tiefsten ist bzw. sind.

Ist das Profilpositiv ein Profilband, ist es bevorzugt, wenn die in Gruppen angeordneten Einschnitte in Umfangsrichtung aneinander gereiht sind, wobei die in Umfangsrichtung aufeinanderfolgenden Gruppen von Einschnitten abwechselnd in axialer Richtung versetzt sind. Ein solches Profilband trägt zu guten Fahr-und Handlingeigenschaften, insbesondere auf nasser Fahrbahn, bei, da die Gruppen von Einschnitten das Profilband sehr gleichmäßig entwässern und dem Profilband zusätzlich eine sehr gleichmäßige Steifigkeit verleihen. Zusätzlich plattet ein solches Profilband beim Abrollen des Reifens am Untergrund sehr gleichmäßig ab, wodurch es auch gleichmäßig abgerieben wird.

Ist das Profilpositiv ein Profilblock, ist in diesem vorzugsweise eine einzige Gruppe von Einschnitten ausgebildet. Die Dimensionen der Einschnitte, wie Länge und Tiefe, können somit besonders gut an die Dimensionierung des Profilblockes zur Erzielung der erwähnten positiven Effekte angepasst werden.

Weitere Merkmale, Vorteile und Einzelheiten der Erfindung werden nun anhand der Zeichnung, die vereinfacht und schematisch Ausführungsbeispiele der Erfindung zeigt, näher beschrieben. Dabei zeigen
Fig. 1 eine Draufsicht auf ein Profilband eines Laufstreifens,
Fig. 2 eine Draufsicht auf eine mittlere Blockreihe eines Laufstreifens,
Fig. 3 eine Draufsicht auf eine schulterseitige Blockreihe eines Laufstreifens,
Fig. 4a eine erste Variante einer Ausführung eines Einschnittes im Längsschnitt,
Fig. 4b eine zweite Variante einer Ausführung eines Einschnittes im Längsschnitt und
Fig. 4c eine dritte Variante einer Ausführung eines Einschnittes im Längsschnitt.

Erfindungsgemäß ausgeführte Fahrzeugluftreifen sind Reifen in Radialbauart, insbesondere Sommerreifen oder Ganzjahresreifen, für Personenkraftwagen, Vans oder Light-Trucks. Die Profiltiefe der Laufstreifen dieser Fahrzeugluftreifen beträgt üblicherweise 6,5 mm bis 8,5 mm.

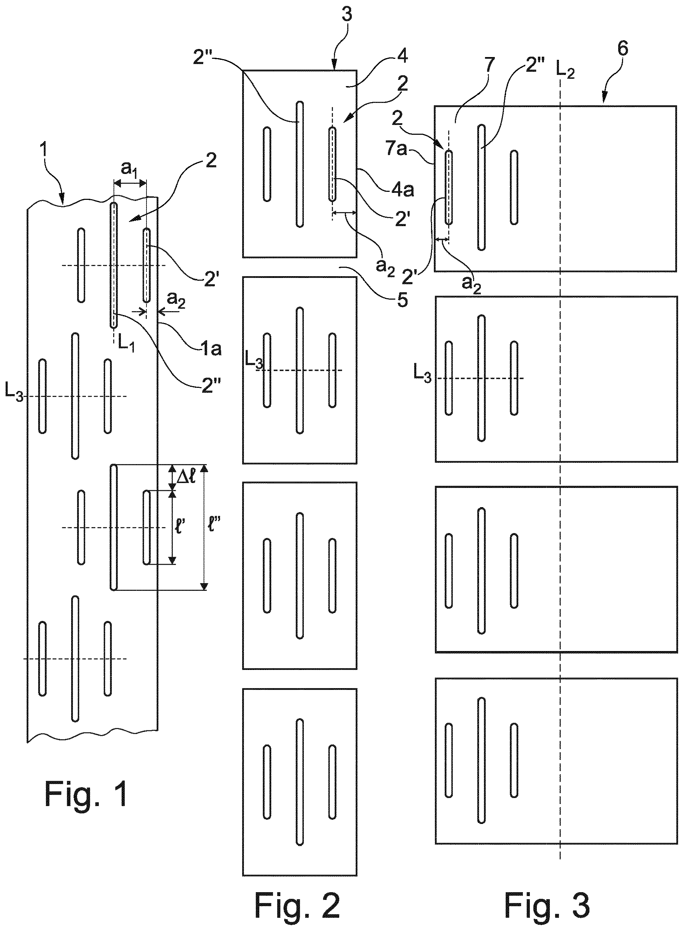

Fig. 1 zeigt einen Umfangsabschnitt eines im mittleren Bereich des Laufstreifens umlaufenden Profilbandes 1, welches bei der dargestellten vereinfachten Ausführungsvariante an der Laufstreifenperipherie zwei in Umfangsrichtung verlaufende Kanten 1a aufweist. Das Profilband 1 ist über seinen Umfang mit in Gruppen 2 angeordneten Einschnitten 2', 2" versehen, wobei jede Gruppe 2 drei in Draufsicht parallel zueinander, jeweils gerade und in Umfangsrichtung sowie komplett innerhalb des Profilbandes 1 verlaufende Einschnitte 2', 2" umfasst. Jede Gruppen 2 weist beim gezeigten Ausführungsbeispiel daher zwei äußere Einschnitte 2' und einen zwischen diesen verlaufenden mittleren Einschnitt 2" auf.

Die jeweils zu einer Gruppe 2 gehörenden Einschnitte 2', 2" sind in Draufsicht bezüglich einer von der Umfangsrichtung und der radialen Richtung aufgespannten, durch die Mitte des mittleren Einschnittes 2" verlaufenden Mittelebene symmetrisch angeordnet. Eine Linie L₁ versinnbildlicht diese Mittelebene für die in Fig. 1 oberste Gruppe 2 von Einschnitten 2', 2". Die beiden äußeren Einschnitte 2' sind daher übereinstimmend ausgeführt und weisen bezogen auf ihre Mittelebenen von der Mittelebene des mittleren Einschnittes 2" in axialer Richtung übereinstimmende Normalabstände a₁ auf, welche 3,0 mm bis 12,0 mm, insbesondere 4,0 mm bis 7,0 mm, betragen. In Umfangsrichtung aufeinanderfolgende Gruppen 2 von Einschnitten 2', 2" sind in axialer Richtung gegeneinander versetzt angeordnet, sodass sich die Gruppen 2 abwechselnd näher an der in Fig. 1 linken Kante 1a des Profilbandes 1 und der in Fig. 1 rechten Kante 1a des Profilbandes 1 befinden. Bei dem in Fig. 1a gezeigten Ausführungsbeispiel entspricht der Versatz der Gruppen 2 von Einschnitten 2', 2" im Wesentlichen dem Normalabstand a₁. Der in jeder Gruppe 2 am Nächsten zu einer Kante 1a befindliche äußere Einschnitt 2' weist bezogen auf seine Mittelebene zu dieser Kante 1a einen Abstand a₂ von mindestens 2,0 mm auf.

Die beiden äußeren Einschnitte 2' einer Gruppe 2 weisen an der Laufstreifenperipherie in Umfangsrichtung eine Länge 1' von 4,0 mm bis 40,0 mm, insbesondere von 8,0 mm bis 35,0 mm, vorzugsweise von 15,0 mm bis 25,0 mm, auf. Der mittlere Einschnitt 2" einer Gruppe 2 weist an der Laufstreifenperipherie in Umfangsrichtung eine Länge 1" auf, welche größer ist als die Länge 1' der äußeren Einschnitte 2', wobei der mittlere Einschnitt 2" die äußeren Einschnitte 2' in Umfangsrichtung, bezogen auf die Enden der Einschnitte 2', 2", jeweils um einen Überstand Δl von 1,0 mm bis 10,0 mm, insbesondere von höchstens 5,0 mm, überragt. Beim gezeigten Ausführungsbeispiel überragt der mittlere Einschnitt 2" die äußeren Einschnitte 2' in beiden Umfangsrichtungen mit übereinstimmenden Überstanden Δl.

Die äußeren Einschnitte 2' und der mittlere Einschnitt 2" weisen eine Breite von 0,4 mm bis 1,4 mm, insbesondere von bis zu 1,2 mm, auf. Bevorzugter Weise ist die Breite des mittleren Einschnittes 2" um mindestens 0,1 mm größer als die Breite der äußeren Einschnitte 2'. An ihrer tiefsten Stelle weisen die Einschnitte 2', 2" in radialer Richtung eine Tiefe von mindestens 2,0 mm und höchstens 90% der Profiltiefe auf. Die äußeren Einschnitte 2' können eine mit dem mittleren Einschnitt 2" übereinstimmende Tiefe aufweisen, sind vorzugsweise jedoch seichter als der mittlere Einschnitt 2" ausgeführt. Insbesondere sind die äußeren Einschnitte 2' an ihrer tiefsten Stelle um mindestens 0,5 mm, insbesondere um mindestens 1,0 mm, seichter als der mittlere Einschnitt 2".

Fig. 2 zeigt eine mittlere Blockreihe 3 mit in Umfangsrichtung aufeinanderfolgenden Blöcken 4, welche durch Querrillen 5 voneinander getrennt sind. Jeder Profilblock 4 weist bei der gezeigten vereinfachten Darstellung an der Laufstreifenperipherie zwei in Umfangsrichtung orientierte Kanten 4a auf. In jedem Profilblock 4 ist mittig eine Gruppe 2 von Einschnitten 2', 2" ausgebildet, wobei die äußeren Einschnitte 2' von den Kanten 4a, jeweils bezogen auf die Mittelebenen der äußeren Einschnitte 2', ebenfalls den bereits erwähnten Abstand a₂ von mindestens 2,0 mm aufweisen.

Fig. 3 zeigt eine schulterseitige Blockreihe 6 mit in Umfangsrichtung aufeinanderfolgenden schulterseitigen Profilblöcken 7. Eine Linie L₂ deutet den hier befindlichen seitlichen Rand der Bodenaufstandsfläche des Laufstreifens an. Innerhalb der Bodenaufstandsfläche ist in jedem schulterseitigen Profilblock 7 eine Gruppe 2 von Einschnitten 2', 2" ausgebildet. Der laufstreifeninnenseitig befindliche äußere Einschnitt 2' jeder Gruppe 2 weist zu einer den zugehörigen schulterseitigen Profilblock 7 laufstreifeninnenseitig an der Laufstreifenperipherie begrenzenden, im Beispiel in Umfangsrichtung orientierten Kante 7a den bereits erwähnten Abstand a₂ von mindestens 2,0 mm auf.

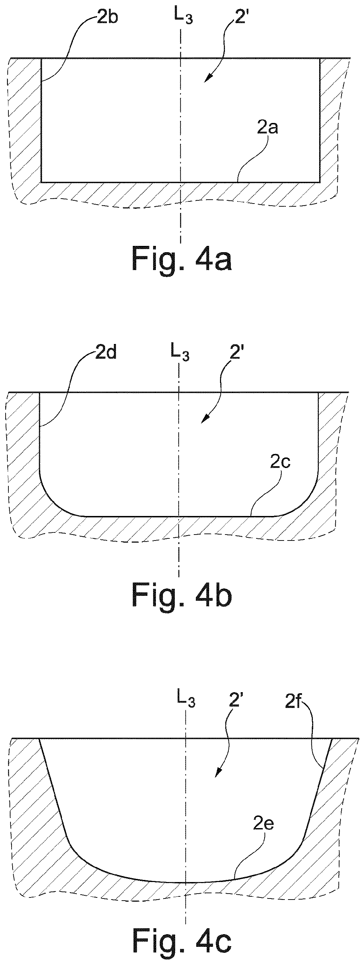

Fig. 4a bis Fig. 4c zeigen Varianten von Längsschnitten der Einschnitte 2', der Einschnitt 2" ist analog ausgeführt. Die Einschnitte 2', 2" sind bezüglich einer quer zu ihrer Längserstreckung und in radialer Richtung verlaufenden Mittelebene, die in Fig. 1 bis Fig. 3 sowie in Fig. 4a bis Fig. 4c durch eine Mittellinie L₃ angedeutet ist, im Längsschnitt symmetrisch ausgeführt.

Bei der in Fig. 4a gezeigten Variante weist der Einschnitt 2' über seine gesamte Erstreckung eine konstante Tiefe und daher einen parallel zur Laufstreifenperipherie verlaufenden Einschnittgrund 2a sowie in radialer Richtung orientierte Endflanken 2b auf. Bei der in Fig. 4b gezeigten Variante weist der Einschnitt 2' einen Einschnittgrund 2c auf, welcher, im dargestellten Längsschnitt betrachtet, flach-U-förmig ausgeführt ist und einen in der Tiefe des Einschnittes 2' verlaufenden zentralen Grundabschnitt aufweist. An die gerundeten Endbereiche des Einschnittgrundes 2c schließen in radialer Richtung orientierte Endflanken 2d an. Bei der Variante gemäß Fig. 4c weist der Einschnitt 2' einen Einschnittgrund 2e auf, welcher im Längsschnitt betrachtet wannenförmig ist, sodass der Einschnitt 2' in seiner Mitte seine tiefste Stelle aufweist. An die Enden des Einschnittgrundes 2e schließen gerade und zur radialen Richtung insbesondere um bis zu 20° geneigte Endflanken 2f an.

Gemäß der Erfindung ausgeführte Gruppen von Einschnitten werden von keinen weiteren Einschnitten gekreuzt oder geschnitten. Bevorzugter Weise weisen die äußeren Einschnitte der Gruppen zu der am nächsten befindlichen Kante der Profilpositive einen Mindestabstand von 2,0 mm auf. Jede Gruppe von Einschnitten kann drei bis sieben, insbesondere bis zu fünf, Einschnitte umfassen. Die innerhalb der Gruppen parallel zueinander verlaufenden Einschnitte können in Draufsicht unter einem von der Umfangsrichtung um bis zu 45°, insbesondere um bis zu 30°, abweichenden Winkel verlaufen. Die zu einer solchen Gruppe gehörenden Einschnitte sind vorzugsweise in Draufsicht bezüglich einer von der in Erstreckungsrichtung der Einschnitte und der radialen Richtung aufgespannten Mittelebene symmetrisch angeordnet.

### Bezugszeichenliste

- 1: Profilband
- 1a: Kante
- 2: Gruppe
- 2': äußerer Einschnitt
- 2": mittlerer Einschnitt
- 2a: Einschnittgrund
- 2b: Endflanke
- 2c: Einschnittgrund
- 2d: Endflanke
- 2e: Einschnittgrund
- 2f: Endflanke
- 3: mittlere Blockreihe
- 4: Profilblock
- 4a: Kante
- 5: Querrille
- 6: schulterseitige Blockreihe
- 7: schulterseitiger Profilblock
- 7a: Kante
- a₁: Normalabstand
- a₂: Abstand
- L₁, L₂: Linie
- L₃: Mittellinie
- l', l": Länge
- Δl: Überstand

## Patentansprüche

1. Fahrzeugluftreifen mit einem Laufstreifen mit Profilpositiven, beispielsweise Profilblöcke (4, 7) oder Profilbänder (1), welche jeweils mit einer Anzahl von in Draufsicht gerade, parallel zueinander sowie in Umfangsrichtung oder von der Umfangsrichtung unter einem um bis zu 30° abweichenden Winkel verlaufenden Einschnitten (2', 2") versehen sind, welche eine Breite von 0,4 mm bis 1,4 mm aufweisen,
**dadurch gekennzeichnet,**
**dass** die Einschnitte (2', 2") in Gruppen (2) angeordnet und die einzigen Einschnitte (2', 2") im jeweiligen Profilpositiv sind, wobei zu jeder Gruppe (2) zumindest drei innerhalb der Profilpositive endende Einschnitte (2', 2") gehören, welche eine Tiefe von mindestens 2,5 mm und höchstens 90% der Profiltiefe sowie eine Länge (l', l") von 4,0 mm bis 40,0 mm aufweisen, wobei die innerhalb einer Gruppe (2) benachbarten Einschnitte (2', 2"), bezogen auf ihre Mittelebenen, voneinander Normalabstände (a₁) von 3,0 mm bis 12,0 mm aufweisen.

2. Fahrzeugluftreifen nach Anspruch 1, **dadurch gekennzeichnet, dass** die Normalabstände (a₁), welche die innerhalb einer Gruppe (2) benachbarten Einschnitte (2', 2"), bezogen auf ihre Mittelebenen, voneinander aufweisen, 4,0 mm bis 7,0 mm betragen.

3. Fahrzeugluftreifen nach Anspruch 1 oder 2, **dadurch gekennzeichnet, dass** Gruppen (2) von Einschnitten (2', 2") vorgesehen sind, deren Einschnitte (2', 2") in Draufsicht bezüglich einer in der Erstreckungsrichtung der Einschnitte (2', 2") und der radialen Richtung aufgespannten, durch die Mitte der Gruppe (2) verlaufenden Mittelebene (L₁) symmetrisch angeordnet sind.

4. Fahrzeugluftreifen nach einem der Ansprüche 1 bis 3, **dadurch gekennzeichnet, dass** Gruppen (2) von Einschnitten (2', 2") vorgesehen sind, die bis zu fünf Einschnitte (2', 2") umfassen.

5. Fahrzeugluftreifen nach einem der Ansprüche 1 bis 4, **dadurch gekennzeichnet, dass** Gruppen (2) von Einschnitten (2', 2") vorgesehen sind, in welchen der/die mittlere(n) Einschnitt(e) (2") die beiden äußeren Einschnitte (2') in Draufsicht beidseitig überragt bzw. überragen, wobei der bezogen auf die Enden der Einschnitte (2', 2") ermittelte Überstand (Δl) 1,0 mm bis 10,0 mm, insbesondere höchstens 5,0 mm, beträgt.

6. Fahrzeugluftreifen nach Anspruch 5, **dadurch gekennzeichnet, dass** bei mehreren mittleren Einschnitten (2") ihr Überstand (Δl) bis zu den beiden äußeren Einschnitten (2') stufenweise abnimmt.

7. Fahrzeugluftreifen nach einem der Ansprüche 1 bis 6, **dadurch gekennzeichnet, dass** die Länge (1, 1") der Einschnitte (2', 2") 8,0 mm bis 35,0 mm, vorzugsweise 15,0 mm bis 25,0 mm, beträgt.

8. Fahrzeugluftreifen nach einem der Ansprüche 1 bis 7, **dadurch gekennzeichnet, dass** die Breite der Einschnitte (2', 2") höchstens 1,2 mm beträgt.

9. Fahrzeugluftreifen nach einem der Ansprüche 1 bis 8, **dadurch gekennzeichnet, dass** Gruppen (2) von Einschnitten (2', 2") vorgesehen sind, bei welchen die Breite der bzw. des mittleren Einschnitte(s) (2") um mindestens 0,1 mm größer ist als die Breite der beiden äußeren Einschnitte (2').

10. Fahrzeugluftreifen nach einem der Ansprüche 1 bis 9, **dadurch gekennzeichnet, dass** die beiden äußeren Einschnitte (2') einer Gruppe (2) zu der am nächsten befindlichen Kante (1a, 4a, 7a) des Profilpositives (1, 4, 7) einen Mindestabstand (a₂) von 2,0 mm aufweisen.

11. Fahrzeugluftreifen nach einem der Ansprüche 1 bis 10, **dadurch gekennzeichnet, dass** Gruppen (2) von Einschnitten (2', 2") vorgesehen sind, bei welchen die äußeren Einschnitte (2') an ihrer tiefsten Stelle um mindestens 0,5 mm, insbesondere um mindestens 1,0 mm, seichter sind als der bzw. die mittleren Einschnitt(e) (2") an ihrer tiefsten Stelle.

12. Fahrzeugluftreifen nach einem der Ansprüche 1 bis 11, **dadurch gekennzeichnet, dass** Gruppen (2) von Einschnitten (2', 2") vorgesehen sind, bei welchen zumindest ein Einschnitt (2', 2"), insbesondere sämtliche Einschnitte (2', 2"), im Längsschnitt betrachtet, einen flach-U-förmigen Einschnittgrund (2c) mit einem in konstanter Tiefe verlaufenden zentralen Grundabschnitt aufweisen.

13. Fahrzeugluftreifen nach einem der Ansprüche 1 bis 12, **dadurch gekennzeichnet, dass** Gruppen (2) von Einschnitten (2', 2") vorgesehen sind, bei welchen zumindest ein Einschnitt (2', 2"), insbesondere sämtliche Einschnitte (2', 2"), im Längsschnitt betrachtet, wannenförmig ist bzw. sind, sodass der/die Einschnitt(e) (2', 2") in seiner/ihrer Mitte am tiefsten ist bzw. sind.

14. Fahrzeugluftreifen nach einem der Ansprüche 1 bis 13, **dadurch gekennzeichnet, dass** das Profilpositiv ein Profilband (1) ist, in welchem die in Gruppen (2) angeordneten Einschnitte (2', 2") in Umfangsrichtung aneinander gereiht sind, wobei die in Umfangsrichtung aufeinanderfolgenden Gruppen (2) von Einschnitten (2', 2") abwechselnd in axialer Richtung versetzt sind.

15. Fahrzeugluftreifen nach einem der Ansprüche 1 bis 14, **dadurch gekennzeichnet, dass** das Profilpositiv ein Profilblock (7) ist, in welchem eine einzige Gruppe (2) von Einschnitten (2', 2") ausgebildet ist.
